# EUROPÄISCHE PATENTSCHRIFT

(11) **EP 2 078 654 B1**
(45) Veröffentlichungstag und Bekanntmachung des Hinweises auf die Patenterteilung: **04.03.2015**
(21) Anmeldenummer: 09150231.0
(22) Anmeldetag: 08.01.2009
(51) Int. Cl.: B61C 17/04, B61D 27/00

(54) **Redundantes Klimasystem für Lokomotiven**
Redundant air conditioning system for locomotives
Système de climatisation redondant pour locomotives

(30) Priorität: 10.01.2008 DE 102008004348
(43) Veröffentlichungstag der Anmeldung: 15.07.2009
(73) Patentinhaber: Siemens Aktiengesellschaft, 80333 München (DE)
(72) Erfinder: Schütz, Winfried, 82140 Olching (DE)

(56) Entgegenhaltungen:
- EP-A1- 1 127 767
- DE-A1- 2 361 943
- DE-A1- 19 545 449
- DE-A1- 19 824 516
- JP-A- 2003 262 127
- US-A1- 2006 124 275

## Beschreibung

Die Erfindung betrifft eine Vorrichtung zum Klimatisieren einer Lokomotive mit einer ersten raumlufttechnischen Anlage und einer zweiten raumlufttechnischen Anlage, wobei die erste raumlufttechnische Anlage und die zweite raumlufttechnische Anlage über Verbindungsmittel in Wirkverbindung miteinander bringbar sind, so dass die erste raumlufttechnische Anlage die zweite raumlufttechnische Anlage bei ihrer Tätigkeit unterstützt.

Die Erfindung betrifft ferner eine Lokomotive mit einer raumlufttechnischen Anlage.

Eine solche Vorrichtung ist aus der EP 1 127 767 A1 bereits bekannt. Dort ist eine Klimatisierungsvorrichtung zur Klimatisierung von Fahrgasträumen eines Schienenfahrzeugs offenbart, das aus einem Wagenzug aus mehreren Wagen gebildet ist. Die Klimatisierungsvorrichtung weist mehrere Module auf, wobei jedes Modul mit einem elektrisch angetriebenen Kompressor, einer Drosseleinrichtung, einem Verdampfer und einem Verflüssiger ausgerüstet ist. Die Module sind über Lüftungskanäle miteinander verbunden und stehen somit in Wirkverbindung zueinander.

Die JP 2003 262127 A offenbart ein Kühlungssystem mit einer ersten und einer zweiten raumlufttechnischen Anlage, die jeweils in einen separaten Kühlkreislauf eingebunden sind. Die Kühlkreisläufe sind über Verbindungsmittel miteinander koppelbar.

Auch die DE 198 24 516 C2 offenbart eine Vorrichtung zum Kühlen eines Omnibusses, wobei die Vorrichtung mehrere raumlufttechnische Anlagen aufweist. Diese sind über Kühlkreisläufe miteinander verbunden.

Weitere Vorrichtungen dieser Art sind in der US 2006/124275 A1, DE 195 45 449 A1 und in der DE 236 19 43 A1 beschrieben.

Lokomotiven oder sonstige von einem Fahrweg geführten Triebfahrzeuge weisen in der Regel an jeder ihrer Stirnseiten einen Führerstand auf, in dem der Fahrzeugführer die Fahrt der Lokomotive steuert. Zum Bereitstellen einer möglichst angenehmen Raumluft ist gemäß dem Stand der Technik für jeden Führerstand eine raumlufttechnische Anlage vorgesehen, wobei jede raumlufttechnische Anlage selbstständig und unabhängig von der anderen raumlufttechnischen Anlage arbeitet. Jede raumlufttechnische Anlage ist daher in der Regel sowohl zum Heizen bei tiefen Außentemperaturen als auch zum Kühlen in warmen Jahreszeiten eingerichtet.

Die raumlufttechnischen Anlagen gemäß dem Stand der Technik weisen ferner eine so große Kühl- bzw. Heizleistung auf, dass diese auch extreme Anforderungen, die bei sehr hohen oder tiefen Außentemperaturen vorliegen, erfüllen. Wie jedoch eigene Untersuchungen ergeben haben, treten solche extremen Außentemperaturen nur selten auf. Im Hinblick auf die üblicherweise vorliegenden Außentemperaturen sind die bekannten raumlufttechnischen Anlagen eines Triebfahrzeuges daher überdimensioniert, teuer und mit hohen Energieverlusten behaftet. Darüber hinaus ist bei Ausfall einer raumlufttechnischen Anlage die Klimatisierung des besetzten Führerstandes nicht mehr möglich, so dass die gesamte Lokomotive zu Wartungszwecken außer Betrieb genommen werden muss.

Aufgabe der Erfindung ist es daher, eine Vorrichtung und eine Lokomotive der eingangs genannten Art bereitzustellen, mit denen ein kostengünstigeres, energiesparendes und gleichzeitig ausfallsicheres Klimatisieren einer Lokomotive ermöglicht ist.

Die Erfindung löst diese Aufgabe ausgehend von der eingangs genannten Vorrichtung dadurch, dass die Verbindungsmittel einen Wärmeträgerkreislauf mit einer Wärmeträgerflüssigkeit aufweisen, wobei eine Umwälzpumpe zum Umwälzen der Wärmeträgerflüssigkeit in dem Wärmeträgerkreislauf vorgesehen ist, wobei jede raumlufttechnische Anlage eine Kälteeinheit mit einem Verdampfer und eine Luftbehandlungseinheit mit einem Wärmetauscher aufweist, wobei jeder Verdampfer mit dem Wärmetauscher der gleichen raumlufttechnischen Anlage und mit dem Verdampfer der jeweils anderen raumlufttechnischen Anlage über die Verbindungsmittel verbunden ist und wobei jeder Wärmetauscher der gleichen raumlufttechnischen Anlage mit dem Wärmetauscher der jeweils anderen raumlufttechnischen Anlage über die Verbindungsmittel verbunden ist.

Die Erfindung löst diese Aufgabe ferner durch eine Lokomotive mit einer solchen Vorrichtung.

Die raumlufttechnischen Anlagen der erfindungsgemäßen Vorrichtung arbeiten nicht mehr unabhängig voneinander. Vielmehr stehen die raumlufttechnischen Anlagen auf eine Weise in Wirkverbindung miteinander, dass eine raumlufttechnische Anlage die jeweils andere raumlufttechnische Anlage beim Heizen, Kühlen oder sonstigen Aufgaben unterstützt. Aufgrund dieser Kopplung können die raumlufttechnischen Anlagen hinsichtlich ihrer Kühl- und Heizleistung unabhängig von den nur selten auftretenden Extrembedingungen ausgelegt werden und für den jeweils vorliegenden Hauptanwendungsfall passend konfiguriert sein. Dieser Hauptanwendungsfall ist selbstverständlich vom Einsatzort der Lokomotive abhängig und variiert somit entsprechend. Bei extremen Außentemperaturen wird erfindungsgemäß die Heiz- beziehungsweise Kühlleistung der jeweils anderen raumlufttechnischen Anlagen hinzugeschaltet, so dass auch bei extremen Außentemperaturen für eine ausreichende Heiz- bzw. Kühlleistung im Rahmen der Erfindung gesorgt ist. Auf diese Art und Weise können die Kosten zum Betreiben der erfindungsgemäßen Vorrichtung die Kosten für dessen Anschaffung oder ihre Herstellungskosten herabgesetzt werden. Darüber hinaus ist auch bei Ausfall einer der raumlufttechnischen Anlagen eine Klimatisierung des besetzten Führerstandes bereitgestellt.

De Verbindungsmittel umfassen vorteilhafterweise Schaltelemente zum Unterbrechen der Wirkverbindung zwischen den raumlufttechnischen Anlagen. Schaltelemente sind beispielsweise ansteuerbare Sperr- oder Regelventile sowie Überbrückungszweige oder dergleichen.

Im Rahmen der Erfindung weisen die Verbindungsmittel einen Wärmeträgerkreislauf mit einer Wärmeträgerflüssigkeit auf, wobei eine Umwälzpumpe zum Umwälzen der Wärmeträgerflüssigkeit in dem Wärmeträgerkreislauf vorgesehen ist. Der Wärmeträgerkreislauf dient zum Transport oder mit anderen Worten zum Führen eines flüssigen Wärmeträgers. Flüssige Wärmeträger, also Wärmeträgerflüssigkeiten, weisen im Gegensatz zu gasförmigen Wärmeträgern eine erhöhte Wärmekapazität auf, so dass der Transport von Wärme oder Kälte mittels des flüssigen Wärmeträgers im Vergleich zu gasförmigen Wärmeträgern durch kompaktere Verbindungsmittel ermöglicht ist. Der Wärmeträgerkreislauf ist zweckmäßigerweise durch ein Rohrsystem realisiert, wobei die Rohrverbindungen des Wärmeträgerkreislaufs einen kleineren Durchmesser aufweisen als dies beim Einsatz von gasförmigen Wärmeträgern der Fall wäre.

Erfindungsgemäß weist jede raumlufttechnischen Anlage eine Kälteeinheit mit einem Verdampfer und einer Luftbehandlungseinheit mit einem Wärmetauscher auf, wobei jeder Verdampfer mit dem Wärmetauscher der gleichen raumlufttechnischen Anlage und mit dem Verdampfer der jeweils anderen raumlufttechnischen Anlage über die Verbindungsmittel verbunden ist und wobei jeder Wärmetauscher mit dem Wärmetauscher der jeweils anderen raumlufttechnischen Anlage über die Verbindungsmittel verbunden ist.

Gemäß einer zweckmäßigen Weiterentwicklung weist der Wärmeträgerkreislauf Überbrückungszweige zum Überbrücken jeder raumlufttechnischen Anlage und ansteuerbare Überbrückungsventile auf. Die raumlufttechnischen Anlagen sind zweckmäßigerweise Teil des Wärmeträgerkreislaufes, so dass der umgewälzte Wärmeträger oder zweckmäßigerweise die umgewälzte Wärmeträgerflüssigkeit auch über die raumlufttechnischen Anlagen transportiert wird. Die Überbrückungszweige ermöglichen jedoch, dass der gewählte Wärmeträger beispielsweise die Wärmeträgerflüssigkeit an der raumlufttechnischen Anlage vorbei transportiert wird, so dass Wirkverbindung zwischen den raumlufttechnischen Anlagen unterbrochen ist. Die Überbrückungszweige sind zweckmäßigerweise mit einem Regelventil bestückt, wobei weitere Regelventile im Wärmeträgerkreislauf angeordnet sind und zwar in Umwälzrichtung gesehen zwischen dem Überbrückungszweig und der zu überbrückenden raumlufttechnischen Anlage. Dabei sind die Regelventile zweckmäßigerweise elektronisch ansteuerbare Regelventile, so dass beispielsweise vom Heiz- oder Kühlbedarf des Führerstandes aus durch Schließen bzw. Öffnen der Regelventile mittels zweckmäßiger Ansteuersignale eine der raumlufttechnischen Anlagen bei Bedarf überbrückt werden kann oder in Reihe geschaltet werden kann.

Zweckmäßigerweise ist eine zweite Umwälzpumpe vorgesehen. Die zweite Umwälzpumpe dient der Sicherheit, da ein Umwälzen der Wärmeträgerflüssigkeit oder eines sonstigen Wärmeträgers auch bei Ausfall einer der Umwälzpumpen ermöglicht ist. Darüber hinaus ist durch die zweite Umwälzpumpe eine vergrößerte Umwälzleistung bereitgestellt.

Zweckmäßigerweise weist der Wärmeträgerkreislauf einen Ausgleichsbehälter auf. Das Volumen der Wärmeträgerflüssigkeit ist temperaturabhängig. So hat eine kältere Wärmeträgerflüssigkeit ein kleines Volumen als eine hoch erhitzte Wärmeträgerflüssigkeit. Um diese temperaturbedingten Volumenschwankungen auszugleichen, ist der Ausgleichsbehälter vorgesehen.

Gemäß einer bevorzugten Ausgestaltung der Erfindung verfügt der Wärmeträgerkreislauf über Einkopplungsmittel zur Wärmeaufnahme oder Wärmeabgabe von bzw. an einen externen Kühloder Wärmekreislauf der Lokomotive. Aufgrund dieser zweckmäßigen Weiterentwicklung ist es möglich, neben beispielsweise zwei Führerständen auch andere Bereiche der Lokomotive zu klimatisieren. Darüber hinaus ist es möglich, ansonsten ungenutzte Verlustwärme, die beim Antrieb der Lokomotive entsteht, sinnvoll zum Heizen beispielsweise eines der Führerstände einzusetzen. Auf diese Weise wird der Energieverbrauch jeder raumlufttechnischen Anlage noch weiter herabgesetzt. Abweichend hiervon ist es jedoch auch möglich einen Bestandteil der Lokomotive, der beispielsweise kälteempfindlich ist, über den Wärmeträgerkreislauf zu beheizen. Die Einkopplungsmittel umfassen beispielsweise einen Kopplungswärmetauscher, der an den Wärmeträgerkreislauf anschließbar ist. Hierbei dient eine zweckmäßige Ventilanordnung, mit elektrisch ansteuerbaren Regelventilen für eine steuerbare Lenkung der Wärmeträgerflüssigkeit über den Kopplungswärmetauscher. Der Kopplungswärmetauscher ist auf der anderen Seite in den Kühlkreislauf beispielsweise eines Umrichters oder sonstigen Bauteils der Lokomotive angeschlossen, das mittels eines solchen Kühlkreislaufs während des Betriebs der Lokomotive gekühlt wird.

Gemäß einer diesbezüglich vorteilhaften Weiterentwicklung umfasst der Wärmeträgerkreislauf einen Ventilverteilblock mit einem Bypasszweig zum Überbrücken der Einkopplungsmittel. Der Ventilverteilerblock weist wenigstens ein ansteuerbares Ventil auf, das zum Schließen bzw. Öffnen des Bypasszweiges eingerichtet ist.

Gemäß einer diesbezüglich zweckmäßigen Weiterentwicklung ist der Wärmetauscher ein von Luft durchströmbarer Luft-/Flüssigwärmetauscher. Luft-/Flüssigwärmetauscher, die einen Wärmeübergang zwischen Luft und Flüssigkeit herbeiführen, sind dem Fachmann bestens bekannt, so dass an dieser Stelle auf deren Aufbau und Funktionsweise nicht detailliert eingegangen zu werden braucht. Der Vollständigkeit halber sei jedoch darauf hingewiesen, dass die raumlufttechnische Anlage in der Regel einen Lüfter zum Erzeugen eines Luftstromes aufweist, der den Wärmetauscher durchsetzt. Der Wärmetauscher umfasst beispielsweise ein handelsübliches Register mit Lamellen zum Vergrößern der Oberfläche des Wärmetauschers, an welcher der Luftstrom vorbeiströmt. Beim Vorbeiströmen an den Lamellen kommt es zum Übergang von Wärme von den Lamellen auf den Luftstrom, der auf diese Art und Weise erwärmt oder gekühlt und anschließend in den besetzten Führerstand oder einen sonstigen Innenraum der Lokomotive eingeleitet wird.

Zweckmäßigerweise umfasst die raumlufttechnische Anlage einen Kondensator, der wie der Verdampfer Teil eines Kältekreislaufs der raumlufttechnischen Anlage ist. Hierbei dient ein Kältekompressor zum Umwälzen eines Kältemittels in dem Kältekreislauf. Der Kondensator ist beispielsweise von Luft durchströmbar und weist ebenfalls ein Register mit einer großen Anströmfläche für die vorbeiströmende Luft auf, so dass es zu einem möglichst hohen Wärmeübergang in diesem Fall von dem Luftstrom auf den Kondensator des Kältekreislaufs kommt.

Zweckmäßigerweise sind die Verbindungsmittel mit einer weiteren raumlufttechnischen Anlage gekoppelt, die zum Kühlen und/oder Wärmen einer elektronischen Komponente der Lokomotive vorgesehen ist. Die weitere raumlufttechnische Anlage umfasst beispielsweise einen Luft-/Flüssigwärmetauscher, wobei beispielsweise auch dieser Luft-/Flüssigwärmetauscher von einem Luftstrom durchströmbar ist, der anschließend zur besagten elektronischen Komponente geführt wird. Der Luftstrom wird zweckmäßigerweise wieder durch einen Ventilator oder mit anderen Worten Lüfter erzeugt.

Weitere zweckmäßige Ausgestaltungen und Vorteile der Erfindung sind Gegenstand der nachfolgenden Beschreibung von Ausführungsbeispielen der Erfindung unter Bezug auf die Figuren der Zeichnung, wobei gleiche Bezugszeichen auf gleichwirkende Bauteile verweisen und wobei
- Figur 1: ein Ausführungsbeispiel einer erfindungsgemäßen Lokomotive in einer Seitenansicht,
- Figur 2: die Lokomotive gemäß Figur 1 in einer Draufsicht,
- Figur 3: ein Ausführungsbeispiel der erfindungsgemäßen Vorrichtung schematisch,
- Figur 4: ein weiteres Ausführungsbeispiel der erfindungsgemäßen Vorrichtung und
- Figur 5: ein weiteres Ausführungsbeispiel der erfindungsgemäßen Vorrichtung zeigen.

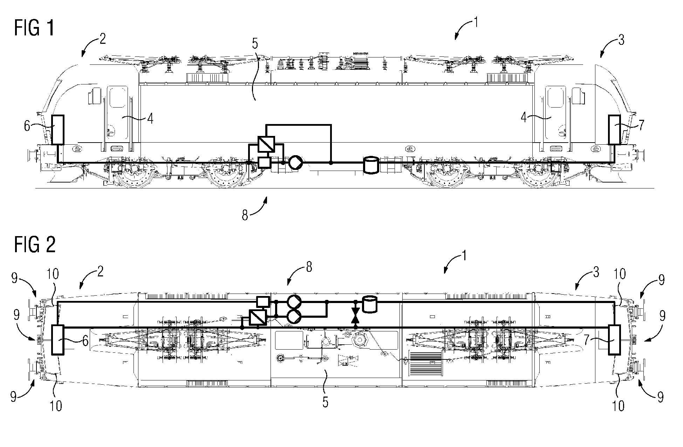

Figur 1 zeigt ein Ausführungsbeispiel der erfindungsgemäßen Lokomotive 1 in einer Seitendarstellung. Es ist erkennbar, dass die Lokomotive 1 einen ersten Führerstand 2 an einer Stirnseite sowie einen zweiten Führerstand 3 an der gegenüberliegenden Stirnseite der Lokomotive 1 aufweist. Jeder Führerstand 2 verfügt über eine Eintrittstür 4, über die der Führerstand von einem Fahrzeugführer von außen betreten werden kann. Zwischen dem Führerstand 2 und dem Führerstand 3 erstreckt sich ein Maschinenraum 5, dessen Längsausdehnung im Vergleich zu derjenigen der Führerstände 2 bzw. 3 erheblich größer ist.

Zum Einstellen der jeweiligen Raumluft weist der Führerstand 2 eine erste raumlufttechnische Anlage 6 und der zweite Führerstand 3 eine zweite raumlufttechnische Anlage 7 auf. Die erste raumlufttechnische Anlage 6 ist mit der zweiten raumlufttechnischen Anlage 7 über Verbindungsmittel 8 verbunden, die im Folgenden noch genauer beschrieben werden. Die Verbindungsmittel 8 ermöglichen, dass sich die raumlufttechnischen Anlagen 6, 7 beim Heizen oder Kühlen gegenseitig unterstützen. Bei einem Totalausfall einer raumlufttechnischen Anlage kann die jeweils andere funktionsfähige raumlufttechnische Anlage die Klimatisierung des jeweils anderen Führerstandes über die Verbindungsmittel 8 übernehmen. Hierbei wird die zu- oder abgeführte Wärme von den Verbindungsmitteln zwischen dem mit Abstand zueinander angeordneten Führerstand und der funktionsfähigen raumlufttechnischen Anlage transportiert.

Figur 2 zeigt die Lokomotive gemäß Figur 1 in einer teilweise transparenten Draufsicht. Es ist erkennbar, dass jede Stirnseite der Lokomotive 1 über zweckmäßige Lufteintritts- bzw. Luftaustrittsöffnungen 9 verfügt, die über zweckmäßige Luftführungskanäle 10 mit der jeweiligen raumlufttechnischen Anlage 6 bzw. 7 verbunden sind. Weiterhin ist schematisch angedeutet, dass im Maschinenraum 5 elektronische oder elektrische Antriebskomponenten wie Generatoren, Umrichter und dergleichen vorgesehen sind.

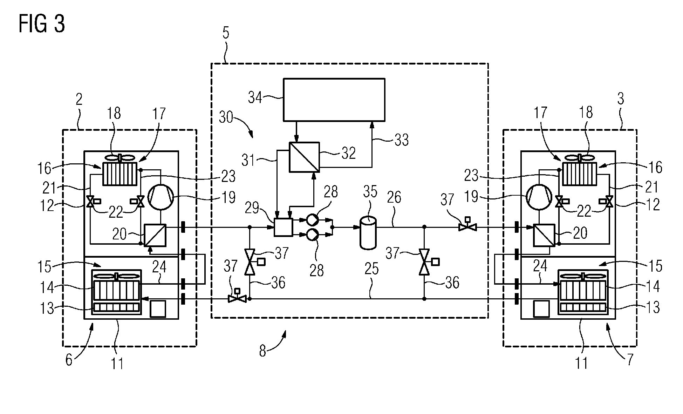

Figur 3 verdeutlicht ein Ausführungsbeispiel der erfindungsgemäßen Vorrichtung in einer schematischen Darstellung, wobei die Führerstände 2 bzw. 3 durch eine dick gestrichelte Umrandung dargestellt sind. Der Maschinenraum 5 ist ebenfalls durch eine dicke gestrichelte Linie verdeutlicht. Es ist erkennbar, dass jede raumlufttechnische Anlage 6 bzw. 7 eine Luftbehandlungseinheit 11 sowie eine Kälteeinheit 12 aufweist. Jede Luftbehandlungseinheit 11 verfügt wiederum über ein elektrisches Heizregister 13, einen Wärmetauscher 14 sowie über einen Lüfter 15 zum Erzeugen eines Luftstromes. Der Wärmetauscher 14 ist in dem gezeigten Ausführungsbeispiel ein Luft-/Flüssigkeitwärmetauscher. Jede Kälteeinheit 12 verfügt hingegen über einen Kältekreislauf 16 mit einem Kondensator 17, einem Lüfter 18, einem Kältekompressor 19, einem hier als Verdampfer 20 bezeichneten Flüssig-Kältemittelwärmetauscher und einem Rohrleitungssystem 21, das mit elektrisch ansteuerbaren Regelventilen 22 ausgerüstet ist. Dabei ist ein Bypasszweig 23 zum Überbrücken des Verdampfers 20 vorgesehen, wobei der Überbrückungszweig 23 mit einem elektrisch ansteuerbaren Stell- oder Regelventil 22 ausgestattet ist. Der Verdampfer 20 ist beispielsweise ein Platten-Verdampfer. Der Wärmetauscher 14 ist als Kühl- oder Heizwärmetauscher über ein zweckmäßiges Rohrleitungssystem 24 mit dem Verdampfer 20 der Kälteeinheit 12 verbunden.

Die raumlufttechnischen Anlagen 6, 7 sind als solche bekannt, so dass an dieser Stelle auf deren Aufbau und Funktionsweise nicht detailliert eingegangen zu werden braucht. Neu gegenüber gekannten raumlufttechnischen Anlagen ist jedoch, dass die Luftbehandlungseinheit 11 erfindungsgemäß über einen Luft-Flüssigkeit-Wärmetauscher 14 verfügt, der über das Rohrleitungssystem 24 mit dem Verdampfer 20 als Kühlwärmetauscher der Kälteeinheit 12 verbunden ist. Weiterhin ist erkennbar, dass die Verbindungsmittel 8 eine in Figur 3 unten dargestellte Wärmeträgerleitung 25 aufweist, welche den Luft-/Flüssigkeit-Wärmetauscher 14 der raumlufttechnischen Anlage 7 mit dem Luft-/Flüssigkeit-Wärmetauscher 14 der raumlufttechnischen Anlage 6 verbindet. Die Verbindungsmittel 8 umfassen ferner eine in Figur 3 oberhalb der Wärmeträgerleitung 25 dargestellte Wärmeträgerleitung 26 zur Verbindung der Verdampfer 20 der raumlufttechnischen Anlagen 7 und 6. Durch die Wärmeträgerleitung 25 und die Wärmeträgerleitung 26 sowie die Rohrleitungen 24 ist ein Wärmeträgerkreislauf bereitgestellt, in dem ein flüssiger Wärmeträger als Wärmeträgerflüssigkeit, beispielsweise ein Glykolalkohol, umwälzbar ist. Zum Umwälzen der besagten Wärmeträgerflüssigkeit dienen redundante Umwälzpumpen 28. Wie durch die in der Figur 3 angedeuteten Pfeile dargestellt ist, wird die Wärmeträgerflüssigkeit von der raumlufttechnischen Anlage 6 zur raumlufttechnischen Anlage 7 über die Wärmeträgerleitung 26 und von der raumlufttechnischen Anlage 7 zur raumlufttechnischen Anlage 6 über die Wärmeträgerleitung 25 transportiert.

Mit Hilfe des Ventilverteilerblocks 29 ist es möglich, die Wärmeträgerflüssigkeit über einen Einkopplungskreislauf 31 zu leiten, in dem ein Einkopplungs-Wärmetauscher 32 angeordnet ist. Der Einkopplungs-Wärmetauscher 32 ist gleichzeitig Teil eines Kühlkreislaufes 33 beispielsweise eines Hilfsbetriebsumrichters 34, der als elektronische Komponente Teil des Maschinenraumes 5 der Lokomotive 1 ist. Mit Hilfe der Einkopplungsmittel 30 ist es somit möglich, die Wärmeträgerflüssigkeit mit der am Hilfsbetriebsumrichter 34 abfallenden Wärme zu speisen. Die am Hilfsbetriebsumrichter abfallende Verlustwärme unterstützt somit das Heizen eines der Führerstände 2, 3 durch die raumlufttechnischen Anlage 6 beziehungsweise 7. Selbstverständlich ist im Rahmen der Erfindung auch die Kopplung der Verbindungsmittel mit einer beliebigen anderen Komponente möglich, an der Verlustwärme abfällt.

Zum Ausgleich von temperaturbedingten Volumenschwankungen des flüssigen Wärmeträgers ist ein Ausgleichsbehälter 35 in der Wärmeträgerleitung 26 vorgesehen. Auf diese Weise können die Volumenschwankungen ausgeglichen werden. Zum Überbrücken einer raumlufttechnischen Anlage 6, 7 sind Überbrückungszweige 36 vorgesehen, die jeweils mit einem Regelventil 37 ausgerüstet sind. Ein weiteres Regelventil befindet sich in Umwälzrichtung gesehen zwischen dem Überbrückungszweig 36 und dem Wärmetauscher 14 in der Wärmeträgerleitung 25 sowie in der Wärmeträgerleitung 26 zwischen dem Überbrückungszweig 36 und dem Verdampfer 20 der raumlufttechnischen Anlage 7. Durch Öffnen des Regelventils 37 im jeweiligen Überbrückungszweig 36 sowie durch Schließen des Regelventils 37 in der Wärmeträgerleitung 25 kann beispielsweise die raumlufttechnischen Anlage 6 des Führerstandes 2 überbrückt werden, so dass der flüssige Wärmeträger nicht mehr über die raumlufttechnische Anlage 6 geführt ist. Die raumlufttechnischen Anlagen 6, 7 sind entkoppelt.

Die Wirkungsweise des in Figur 3 dargestellten Ausführungsbeispiels der erfindungsgemäßen Vorrichtung kann wie folgt beschrieben werden:
Ist beispielsweise der Führerstand 2 besetzt und der Führerstand 3 unbesetzt und herrschen keine extremen Außentemperaturen, beispielsweise bei Temperaturen im Bereich von 1°C, sind die raumlufttechnischen Anlagen 6 und 7 gegebenenfalls mit Unterstützung der vom Hilfsbetriebsumrichter 34 gewonnenen Wärmeenergie in der Lage die Führerstände 2 und 3 ohne Hilfe der elektrischen Heizregister 13 zu beheizen. Die elektrischen Heizregister 13 werden durch die Regelung des Klimasystems abgeschaltet, sobald genügend Abwärme aus dem Einkopplungskreis 31 an die Wärmeträgerflüssigkeit abgegeben wird. Die elektrischen Heizregister 13 der Luftbehandlungseinheiten 11 sind nur in Betrieb, wenn die Wärmeträgerflüssigkeit noch nicht ausreichend Wärmeenergie aus dem Einkopplungskreis 31 über den Kopplungswärmetauscher 32 zur Verfügung stellen kann, weil beispielsweise die Lokomotive im Freien stand und die Aggregate des Einkopplungskreises sich nach Inbetriebsetzen erst erwärmen müssen. Die Wärmeträgerflüssigkeit wird mittels Kopplungswärmetauscher 32, der beispielsweise ein Flüssigkeit-Flüssigkeit-Wärmetauscher ist, beispielsweise durch die Abwärme des Hilfbetriebsumrichters 34 erwärmt und strömt über die Wärmeträgerleitungen 25 und 26 zu den Luft-Flüssigkeit-Wärmetauschern 14 in den Luftbehandlungseinheiten 11 der Führerstände 2 und 3.

Soll bei gleichen Außenbedingungen nur der besetzte Führerstand 2 beheizt werden, ist es mit Hilfe der Steuer- und Regelventile 37 möglich, den Luft-/Flüssigkeit-Wärmetauscher 14 der Luftbehandlungseinheit 11 des Führerstands 3 zu umgehen. Auf diese Weise wird beispielsweise die Aufheizzeit des Führerstandes 2 durch die zusätzlich gewonnene Wärmeenergie der Wärmeträgers verkürzt.

Ist bei niedrigen Außentemperaturen, beispielsweise bei - 25°C, der Führerstand 2 besetzt und der Führerstand 3 unbesetzt, kann mittels zweckmäßiger Ansteuerung der Steuer- und Regelventile 37 der Luft- Flüssigkeitswärmetauscher 14 der Luftbehandlungseinheit 11 des Führerstands 3 umgangen werden, so dass ein Einstellen der gewünschte Raumtemperatur des Führerstandes 2 auch bei einer Außentemperatur von -25°C mit Hilfe der zusätzlichen Wärmeenergie ermöglicht ist.

Erst wenn die Außentemperaturen extrem niedrig sind und im Bereich von -40°C liegen, werden die elektrischen Heizregister 13 der Luftbehandlungseinheiten 11 des Führerstandes 3 mittels einer Steuerung der erfindungsgemäßen Vorrichtung oder auf eine sonstige Weise wieder zugeschaltet, um die gewünschten Raumtemperaturen im besetzten Führerstand 2 einstellen zu können.

Durch die Ausnutzung der Abwärme, können die elektrischen Heizregister 13 der Luftbehandlungseinheiten 11 entsprechend weniger leistungsstark ausgeführt sein und bedarfsgerechter eingesetzt werden. Daraus resultiert im Betrieb des Fahrzeugs eine entsprechende niedrigere Leistungsaufnahme und effizientere Ausnutzung der Energie, so dass die Betriebskosten minimiert sind.

Eine entsprechende Vorgehensweise erfolgt bei extrem hohen Außentemperaturen, wobei jedoch die Kälteeinheiten 12 der raumlufttechnischen Anlagen 6 und 7 miteinander gekoppelt werden. Dazu sind die Regelventile 37 der Wärmeträgerleitung 26 und der Wärmeträgerleitung 25 jeweils geöffnet, wohingegen die Regelventile 37 in den Überbrückungszweigen 36 jeweils geschlossen sind. Die raumlufttechnische Anlage des unbesetzten Führerstandes wird erfindungsgemäß daher zugeschaltet, wenn die Kühlleistung der raumlufttechnischen Anlage des besetzten Führerstandes möglicherweise nicht mehr ausreicht, um die gewünschten klimatischen Bedingungen in dem besetzten Führerstand herbeizuführen.

Ist beispielsweise der Führerstand 2 besetzt und der Führerstand 3 unbesetzt und herrschen keine extremen Außentemperaturen, beispielsweise bei Temperaturen im Bereich von 15-25°C, reicht die Kälteeinheit 12 der raumlufttechnischen Anlage 6 aus, um die beiden Führerstände 2 und 3 ausreichend gut zu klimatisieren. Die Kälteeinheit 12 der raumlufttechnischen Anlage 7 wird dabei beispielsweise von einem Regler oder einer Steuerung der erfindungsgemäßen Vorrichtung durch zweckmäßiger Ansteuerung der Regelventile 37 überbrückt und komplett abgeschaltet. Die überbrückte raumlufttechnische Anlage 7 verbraucht daher keinerlei Energie.

Ist beispielsweise der Führerstand 2 besetzt und der Führerstand 3 unbesetzt und herrschen extreme Außentemperaturen, beispielsweise Temperaturen im Bereich von 30 - 40°C, sind die Kälteeinheiten 12 der raumlufttechnischen Anlagen 6 und 7 in Reihe geschaltet, um den besetzten Führerstand 2 ausreichend gut zu klimatisieren.

Da die Durchschnittsaußentemperaturen bei Kühlbetrieb der erfindungsgemäßen Vorrichtung, bei der die Fahrzeuge üblicherweise auf der Welt betrieben, unterhalb von 25°C liegen, kann die erfindungsgemäße Vorrichtung energetisch besser genutzt und bedarfgerechter eingesetzt werden.

Ein weiterer Vorteil ist die Redundanz dieser Anordnung, da bei Ausfall einer der beiden Kälteeinheiten 12 die zweite Kälteeinheit die Klimatisierung beider Führerstände 2 und 3 bei Normalbedingungen übernehmen kann. Liegen Extrembedingungen vor, kann zumindest noch der besetzte Führerstand zum Teil klimatisiert werden.

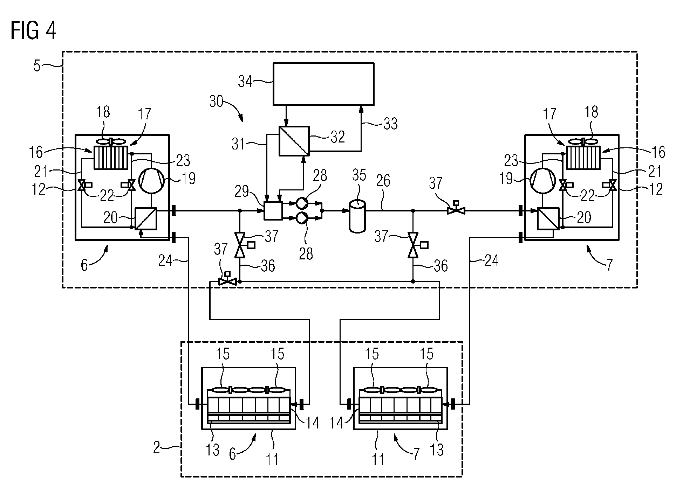

Figur 4 zeigt ein weiteres Ausführungsbeispiel der erfindungsgemäßen Vorrichtung, wobei die Luftbehandlungseinheiten 11 der raumlufttechnischen Anlage 6 und 7 zum Klimatisieren eines gemeinsamen Führerstandes eingerichtet und die Kälteeinheiten 12 der raumlufttechnischen Anlagen 6 und 7 im Maschinenraum 5 angeordnet sind. Mit diesem Ausführungsbeispiel kann man möglicherweise anderen Platz- oder Raumerfordernissen der Lokomotive gerecht werden. Die Wirkungs- und Funktionsweise des Ausführungsbeispiels gemäß Figur 4 ist jedoch derjenigen in Figur 3 entsprechend, so dass an dieser Stelle eine detaillierte erneute Beschreibung entfallen kann.

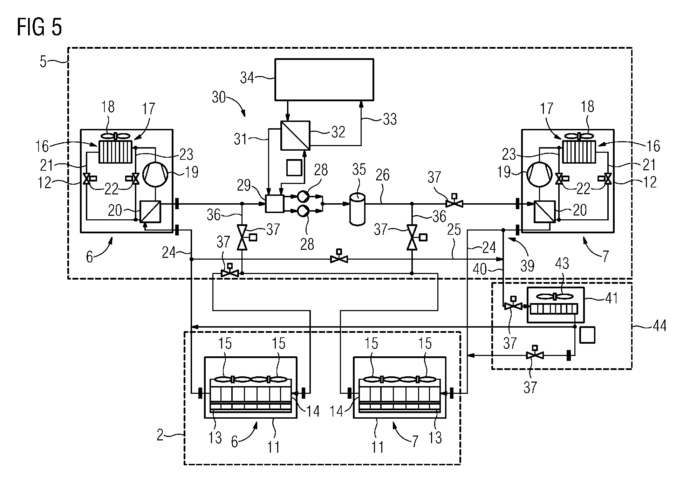

Figur 5 zeigt ein weiteres Ausführungsbeispiel der erfindungsgemäßen Vorrichtung, das demjenigen der Figur 4 weitestgehend entspricht, wobei jedoch im Unterschied zu Figur 4 an der Rohrleitung 24 zur Verbindung des Verdampfers 20 und des Luft-/Flüssigkeit-Wärmetauschers 14 ein Verzweigungspunkt 39 vorgesehen ist, der über einen Parallelzweig 40 und einem Regelventil 37 mit einer weiteren raumlufttechnischen Anlage 41 verbunden ist. Über die mit einem Regelventil 37 ausgerüstete Rohrleitung 43 ist die zusätzliche raumlufttechnische Anlage 41 mit der Rohrleitung 24 verbunden, so dass ein verschließbarer Parallelzweig bereitgestellt ist. Die zusätzliche raumlufttechnische Anlage 41 ist beispielsweise in einem Hilfsbetriebegerüst 44 im Maschinenraum der Lokomotive 1 angeordnet und dient zur Kühlung oder Heizung ihrer elektronischen Komponenten.

## Patentansprüche

1. Vorrichtung zum Klimatisieren einer Lokomotive (1) mit einer ersten raumlufttechnischen Anlage (6) und einer zweiten raumlufttechnischen Anlage (7), wobei die erste raumlufttechnische Anlage (6) und die zweite raumlufttechnische Anlage (7) über Verbindungsmittel (8) in Wirkverbindung miteinander bringbar sind, so dass die erste raumlufttechnische Anlage (6) die zweite raumlufttechnische Anlage (7) bei ihrer Tätigkeit unterstützt,**dadurch gekennzeichnet**, dassdie Verbindungsmittel (8) einen Wärmeträgerkreislauf (24,25,26) mit einer Wärmeträgerflüssigkeit aufweisen, wobei eine Umwälzpumpe (28) zum Umwälzen der Wärmeträgerflüssigkeit in dem Wärmeträgerkreislauf (24,25,26) vorgesehen ist, wobei jede raumlufttechnische Anlage (6,7) eine Kälteeinheit (12) mit einem Verdampfer (20) und eine Luftbehandlungseinheit (11) mit einem Wärmetauscher (14) aufweist, wobei jeder Verdampfer (20) mit dem Wärmetauscher (14) der gleichen raumlufttechnischen Anlage (6,7) und mit dem Verdampfer (20) der jeweils anderen raumlufttechnischen Anlage (6,7) über die Verbindungsmittel (8) verbunden ist und wobei jeder Wärmetauscher (14) der gleichen raumlufttechnischen Anlage (6,7) mit dem Wärmetauscher (14) der jeweils anderen raumlufttechnischen Anlage (6,7) über die Verbindungsmittel (8) verbunden ist.

2. Vorrichtung nach Anspruch 1, **dadurch gekennzeichnet, dass** der Wärmeträgerkreislauf (24,25,26) Überbrückungszweige (36) zum Überbrücken jeder raumlufttechnischen Anlage (6,7) und ansteuerbare Überbrückungsventile (37) aufweist.

3. Vorrichtung nach einem der Ansprüche 1 oder 2,
**dadurch gekennzeichnet, dass** eine zweite Umwälzpumpe (28) vorgesehen ist.

4. Vorrichtung nach einem der vorhergehenden Ansprüche,
**dadurch gekennzeichnet, dass** der Wärmeträgerkreislauf (24,25,26) einen Ausgleichsbehälter (36) aufweist.

5. Vorrichtung nach einem der vorhergehenden Ansprüche,
**dadurch gekennzeichnet, dass** der Wärmeträgerkreislauf (24,25,26) Einkopplungsmittel (36) zur Aufnahme oder Abgabe von Wärme von beziehungsweise an einen externen Kühl- und/oder Wärmekreislauf der Lokomotive aufweist.

6. Vorrichtung nach Anspruch 5,
**dadurch gekennzeichnet, dass** der Wärmeträgerkreislauf (24,25,26) einen Ventilverteilblock (29) mit einem Bypasszweig zum Überbrücken der Einkopplungsmittel (30) aufweist.

7. Vorrichtung nach Anspruch 1,
**dadurch gekennzeichnet, dass** jeder Wärmetauscher ein von Luft durchströmbarer Luft-/Flüssigkeit-Wärmetauscher (14) ist.

8. Vorrichtung nach einem der vorhergehenden Ansprüche,
**dadurch gekennzeichnet, dass** die Verbindungsmittel (8) mit einer weiteren raumlufttechnischen Anlage (41) gekoppelt sind, die zum Kühlen und/oder Erwärmen einer elektronischen Komponente der Lokomotive (1) vorgesehen ist.

9. Vorrichtung nach einem der vorhergehenden Ansprüche,
**dadurch gekennzeichnet, dass** die Verbindungsmittel Schaltelemente zum Unterbrechen der Wirkverbindung zwischen den raumlufttechnischen Anlagen aufweisen.

10. Lokomotive (1) mit einer Vorrichtung gemäß einem der vorhergehenden Ansprüche.

## Claims

1. Device for air conditioning a locomotive (1) with a first ventilation and air-conditioning system (6) and a second ventilation and air-conditioning system (7), wherein the first ventilation and air-conditioning system (6) and the second ventilation and air-conditioning system (7) are able to be effectively connected to each other via connection means (8), so that the first ventilation and air-conditioning system (6) supports the second ventilation and air-conditioning system (7) in its activity, **characterised in that** the connection means (8) have a heat transfer medium circuit (24, 25, 26) with a heat transfer medium liquid, wherein a circulation pump (28) is provided for circulating the heat transfer medium liquid in the heat transfer medium circuit (24, 25, 26), wherein each ventilation and air-conditioning system (6, 7) has a cooling unit (12) with an evaporator (20) and an air conditioning unit (11) with a heat exchanger (14), wherein each evaporator (20) is connected to the heat exchanger (14) of the same ventilation and air-conditioning system (6, 7) and with the evaporator (20) of the other ventilation and air-conditioning system (6, 7) in each case via the connection means (8) and wherein each heat exchanger (14) of the same ventilation and air-conditioning system (6, 7) is connected to the heat exchanger (14) of the other ventilation and air-conditioning system (6, 7) in each case via the connection means (8).

2. Device according to claim 1, **characterised in that** the heat transfer medium circuit (24, 25, 26) has bridging branches (36) for bridging each ventilation and air-conditioning system (6, 7) and activatable bridging valves (37).

3. Device according to one of claims 1 or 2,
**characterised in that**
a second circulation pump (28) is provided.

4. Device according to one of one of the preceding claims,
**characterised in that**
the heat transfer medium circuit (24, 25, 26) has an expansion tank (36).

5. Device according to one of one of the preceding claims,
**characterised in that**
the heat transfer medium circuit (24, 25, 26) has coupling means (36) to accept or emit heat from or to an external cooling and/or heating circuit of the locomotive.

6. Device according to claim 5,
**characterised in that**
the heat transfer medium circuit (24, 25, 26) has a valve distribution block (29) with a bypass branch to bridge the coupling means (30).

7. Device according to claim 1,
**characterised in that**
each heat exchanger is an air-to-liquid heat exchanger (14) through which air is able to flow.

8. Device according to one of one of the preceding claims,
**characterised in that**
the connection means (8) are coupled to a further ventilation and air-conditioning system (41), which is provided for cooling and/or for heating an electronic component of the locomotive (1).

9. Device according to one of one of the preceding claims,
**characterised in that**
the connection means have switching elements for interrupting the effective connection between the ventilation and air-conditioning systems.

10. Locomotive (1) with a device according to one of the preceding claims.

## Revendications

1. Installation de conditionnement d'air d'une locomotive ( 1 ) comprenant un premier poste (6) de technique de ventilation des locaux et un deuxième poste ( 7 ) de technique de ventilation des locaux, le premier poste ( 6 ) de technique de ventilation des locaux et le deuxième poste (7) de technique de ventilation des locaux pouvant être mis en liaison d'action entre eux par des moyens ( 8 ) de liaison, de manière à ce que le premier poste (6) de technique de ventilation des locaux soutienne, lors de son activité, le deuxième poste ( 7 ) de technique de ventilation des locaux, **caractérisée en ce que** les moyens (8) de liaison ont un circuit (24, 25, 26) caloporteur, ayant un liquide caloporteur, une pompe (28) de recirculation pour la recirculation du liquide caloporteur étant prévue dans le circuit ( 24, 25, 26 ) caloporteur, chaque poste ( 6, 7 ) de technique de ventilation des locaux comportant un groupe ( 12 ) frigorifique ayant un évaporateur ( 20 ) et un groupe ( 11 ) de traitement de l'air ayant un échangeur de chaleur ( 14 ), chaque évaporateur ( 20 ) communiquant avec l'échangeur de chaleur (14) du même poste (6, 7) de technique de ventilation des locaux et avec l'évaporateur ( 20 ) de respectivement l'autre poste ( 6, 7 ) de technique de ventilation des locaux, par les moyens ( 8 ) de liaison, et chaque échangeur de chaleur ( 14 ) du même poste ( 6, 7 ) de technique de ventilation des locaux communiquant avec l'échangeur de chaleur ( 14 ) de respectivement l'autre poste ( 6, 7 ) de technique de ventilation des locaux par les moyens ( 8 ) de liaison.

2. Installation suivant la revendication 1, **caractérisée en ce que** le circuit ( 24, 25, 26 ) caloporteur a des branches ( 36 ) de court-circuit pour court-circuiter chaque poste ( 6, 7 ) de technique de ventilation des locaux et des vannes ( 37 ) de court-circuit pouvant être commandées.

3. Installation suivant la revendication 1 ou 2, **caractérisée en ce qu'**il est prévu une deuxième pompe (28) de recirculation.

4. Installation suivant l'une des revendications précédentes, **caractérisée en ce que** le circuit ( 24, 25, 26 ) caloporteur comporte un réservoir ( 36 ) de compensation.

5. Installation suivant l'une des revendications précédentes, **caractérisée en ce que** le circuit ( 24, 25, 26 ) caloporteur comporte des moyens ( 36 ) d'alimentation pour absorber de la chaleur d'un circuit extérieur de refroidissement et/ou de chauffage de la locomotive ou pour lui en céder.

6. Installation suivant la revendication 5, **caractérisée en ce que** le circuit (24, 25, 26) caloporteur comporte un bloc ( 29 ) distributeur de vannes ayant une branche de dérivation pour la mise en court-circuit du moyen ( 30 ) d'alimentation.

7. Installation suivant la revendication 1, **caractérisée en ce que** chaque échangeur de chaleur est un échangeur de chaleur ( 14 ) air/liquide dans lequel peut passer de l'air.

8. Installation suivant l'une des revendications précédentes, **caractérisée en ce que** les moyens ( 8 ) de liaison sont reliés à un autre poste (41) de technique de ventilation des locaux, qui est prévu pour refroidir et/ou réchauffer un composant électronique de la locomotive ( 1 ).

9. Installation suivant l'une des revendications précédentes, **caractérisée en ce que** les moyens de liaison ont des éléments de commutation pour interrompre la liaison active entre les postes de technique de ventilation des locaux.

10. Locomotive ( 1 ) ayant une installation suivant l'une des revendications précédentes.
